# EUROPEAN PATENT APPLICATION

(11) **EP 4 656 917 A1**
(43) Date of publication of application: **03.12.2025**
(21) Application number: 24787855.6
(22) Date of filing: 11.03.2024
(51) Int. Cl.: F16K 17/19, B65D 90/32

(54) **SEALING STRUCTURE, STORAGE TANK BREATHER VALVE, AND STORAGE TANK**

(30) Priority: 10.04.2023 CN 202310372469; 11.09.2023 CN 202311168691; 11.09.2023 CN 202311168701; 11.09.2023 CN 202322458198 U
(71) Applicant: China Petroleum & Chemical Corporation, Beijing 100728 (CN); Sinopec Research Institute of Safety Engineering Co., Ltd., Qingdao, Shandong 266104 (CN)
(72) Inventor: CHENG, Longjun, Qingdao, Shandong 266104 (CN); DANG, Wenyi, Qingdao, Shandong 266104 (CN); TAO, Bin, Qingdao, Shandong 266104 (CN); LIU, Juan, Qingdao, Shandong 266104 (CN); WANG, Shiqiang, Qingdao, Shandong 266104 (CN); LI, Liangliang, Qingdao, Shandong 266104 (CN); SUN, Mingyuan, Qingdao, Shandong 266104 (CN); ZHANG, Yuping, Qingdao, Shandong 266104 (CN); ZHANG, Ruiyu, Qingdao, Shandong 266104 (CN); LI, Rongbin, Qingdao, Shandong 266104 (CN)
(74) Representative: Hoffmann Eitle
(86) International application number: PCT/CN2024/081002
(87) International publication number: WO 2024/212749

(57) **Abstract**

The present application relates to the technical field of storage tanks, and discloses a sealing structure, a storage tank breather valve and a storage tank. The sealing structure comprises: a valve seat and a valve disc, which are arranged opposite to each other and used for fitted sealing against each other, wherein a fitted sealing surface of one of the valve disc and the valve seat is provided with an inner annular groove and an outer annular groove surrounding the inner annular groove, and a fitted sealing side of the other of the valve disc and the valve seat is provided with an inner annular sealing protrusion arranged in alignment to the inner annular groove and an outer annular sealing protrusion arranged in alignment to the outer annular groove; a flexible sealing diaphragm covers the inner annular groove and the outer annular groove; when the valve seat and the valve disc are in a fitted sealing state, the inner annular sealing protrusion at least partially extends into the inner annular groove, the outer annular sealing protrusion at least partially extends into the outer annular groove, and the flexible sealing diaphragm, which is pushed by respective protrusion tips of the inner annular sealing protrusion and the outer annular sealing protrusion, elastically extends towards the inner annular groove and the outer annular groove. The sealing structure can improve the sealing performance and safety performance of a storage tank breather valve and a storage tank.

## Description

### Cross Reference to Related Applications

The present application claims the benefits of Chinese Patent Application No. 202310372469.7 filed on Apr. 10, 2023, Chinese Patent Application No. 202311168691.1 filed on Sep. 11, 2023, Chinese Patent Application No. 202311168701.1 filed on Sep. 11, 2023 and Chinese Patent Application No. 202322458198.5 filed on Sep. 11, 2023, the contents of which are incorporated herein by reference.

### Field of the Invention

The present application relates to the technical field of storage tanks, in particular to a sealing structure, a storage tank breather valve and a storage tank.

### Background of the Invention

As one of the safety accessories of a storage tank, a storage tank breather valve is used to reduce the evaporation loss of a volatile liquid in a storage tank at the atmospheric or a low pressure. A storage tank breather valve can not only maintain the balance of gas pressure in the storage tank to ensure that the storage tank will not be damaged under an overpressure or a negative pressure, but also reduce the volatilization and loss of the medium in the storage tank by utilizing the pressure-bearing capacity of the storage tank itself. Therefore, the storage tank breather valve plays an important role in safety and environmental protection.

Under normal working conditions, the storage tank breather valve begins to suck air into the storage tank once the storage tank outputs the material therein; the storage tank breather valve begins to exhale the gas in the storage tank once a material is filled into the storage tank; the storage tank breather valve exhales vapor or inhales air or nitrogen as the vapor pressure of the material in the storage tank is increased or decreased owing to climate change or other reasons. The sealing structures of existing storage tank breather valves are in a weak design (e.g., only a single seal is used), which results in unstable sealing performance of the sealing structure and a problem of leakage during long-term use. Once the storage tank breather valve becomes abnormal, there will be major safety hazards and environmental risks in the storage tank area, and it will be difficult to ensure personal safety and/or property safety.

### Summary of the Invention

The object of the present application is to provide a sealing structure, a storage tank breather valve and a storage tank. The sealing structure has a simple structure, effectively improves the sealing performance, safety performance and environmental protection performance of the storage tank breather valve and the storage tank, and ensures personal safety and property safety.

In order to achieve the above object, in a first aspect, the present application provides a sealing structure, which comprises:
a valve seat and a valve disc, which are arranged opposite to each other and used for fitted sealing against each other, wherein a fitted sealing surface of one of the valve disc and the valve seat is provided with an inner annular groove and an outer annular groove surrounding the inner annular groove, and a fitted sealing side of the other of the valve disc and the valve seat is provided with an inner annular sealing protrusion arranged in alignment to the inner annular groove and an outer annular sealing protrusion arranged in alignment to the outer annular groove;
a flexible sealing diaphragm that is arranged on the fitted sealing surface and covers the inner annular groove and the outer annular groove;
wherein, when the valve seat and the valve disc are in a fitted sealing state, the inner annular sealing protrusion at least partially extends into the inner annular groove, the outer annular sealing protrusion at least partially extends into the outer annular groove, and the flexible sealing diaphragm, which is pushed by respective protrusion tips of the inner annular sealing protrusion and the outer annular sealing protrusion, elastically extends towards the inner annular groove and the outer annular groove.

In the embodiments of the present application, one inner annular groove, one outer annular groove, one inner annular sealing protrusion and one outer annular sealing protrusion are provided respectively, or a plurality of inner annular grooves, a plurality of outer annular grooves, a plurality of inner annular sealing protrusions and a plurality of outer annular sealing protrusions are provided and arranged in a form of concentric circles respectively.

In the embodiments of the present application, the inner annular groove and the outer annular groove are formed in the fitted sealing surface of the valve disc in a recessed form, the flexible sealing diaphragm covers the fitted sealing surface of the valve disc, and the inner annular sealing protrusion and the outer annular sealing protrusion are formed on a fitted sealing side of the valve seat;
optionally, the flexible sealing diaphragm is pressed against the fitted sealing surface of the valve disc by a circular membrane fixing plate.

In the embodiments of the present application, the protrusion tips of the inner annular sealing protrusion and the outer annular sealing protrusion are formed as sharp-angled ends for pushing the flexible sealing diaphragm, and the tip contact surface of the sharp-angled end contacting with the flexible sealing diaphragm is formed as an arc surface;
optionally, an internal angle of the sharp-angled end is within a range of 45° to 75°;
optionally, an arc diameter of the arc surface is within a range of 0.1 mm to 0.3 mm.

In the embodiments of the present application, the height of protrusion of the outer annular sealing protrusion is greater than that of the inner annular sealing protrusion;
optionally, a difference between the height of protrusion of the outer annular sealing protrusion and the height of protrusion of the inner annular sealing protrusion is within a range of 0.1 mm to 0.8 mm.

In the embodiments of the present application, a sidewall of the inner annular groove and a sidewall of the outer annular groove are formed into a smooth arc transition respectively at a corner junction with the fitted sealing surface of the valve disc;
optionally, an arc angle of the formed transition arc is within a range of 1.1 rads to 1.2 rads.

In the embodiments of the present application, the sealing structure further comprises:
a cushion ring arranged in the recess of the outer annular groove, wherein the protrusion tip of the outer annular sealing protrusion pushes the flexible sealing diaphragm towards the direction of the cushion ring;
optionally, the cushion ring is made of polyurethane elastomer.

In the embodiments of the present application, the flexible sealing diaphragm comprises a polymer sheet layer and a fluororubber composite layer that are laminated together;
optionally, the fluororubber composite layer is made of a raw material composition containing fluororubber, an inorganic filler, an acid absorber, a vulcanizing agent, a release agent and a colorant;
optionally, the polymer sheet that forms the polymer sheet layer is selected from one or more of polyetheretherketone, polytetrafluoroethylene and polyimide;
optionally, the polymer sheet layer is in thickness of 0.1 mm to 1 mm;
optionally, the ratio of the thickness of the polymer sheet layer to the thickness of the fluororubber composite layer is within a range of 0.25 to 1;
optionally, the flexible sealing diaphragm is in an annular shape.

In the embodiments of the present application, the valve disc is a rotary-wing valve disc that can be driven by overflowing gas flow to spin.

In the embodiments of the present application, the rotary-wing valve disc comprises:
a disc body, wherein the inner annular groove and the outer annular groove are formed in a disc surface of the disc body;
a rotary-wing ring, which is pendent downwards from the periphery of the disc body and comprises a plurality of rotary wings arranged at an interval in a circumferential direction, with a clearance gas flow passage formed between every two adjacent rotary wings, wherein the valve disc can be driven to spin by the overflowing gas flow flowing through the clearance gas flow passages from inside to outside;
optionally, an arc angle of the rotary wing is within a range of 0.3 rads to 0.4 rads;
optionally, there are 15-20 rotary wings;
optionally, the width of the clearance gas flow passage is within a range of 3 mm to 6 mm.

In a second aspect, the present application provides a storage tank having a pressure end and a vacuum end therein, and the storage tank breather valve comprises the sealing structure described above, and the sealing structure is arranged at the pressure end and/or the vacuum end.

In the embodiments of the present application, the sealing structure comprises a pressure end sealing structure arranged at the pressure end and a vacuum end sealing structure arranged at the vacuum end; the valve disc of the sealing structure is connected with a valve stem, the valve stem connected with the pressure end sealing structure extends from the disc surface of the valve disc in a direction away from the valve seat, and the valve stem connected with the vacuum end sealing structure extends from the disc surface of the valve disc towards the valve seat.

In the embodiments of the present application, at the pressure end, a pressure end mounting base extending radially inwards is formed on the inner wall of the casing of the storage tank breather valve, and a pressure end valve hole is formed around the pressure end mounting base; at the vacuum end, a vacuum end mounting base for mounting the vacuum end sealing structure is formed in the casing of the storage tank breather valve, and a vacuum end valve hole is formed around the vacuum end mounting base; an air inlet is formed at the bottom of the casing of the storage tank breather valve, and a central axis of the pressure end valve hole, a central axis of the vacuum end valve hole and a central axis of the air inlet coincide with each other.

In the embodiments of the present application, at the pressure end, a valve stem positioning bushing fitted outside of the valve stem of the pressure end sealing structure is fixedly arranged in the storage tank breather valve, a plurality of positioning balls are provided between an inner circumferential wall of the valve stem positioning bushing and an outer circumferential side of the valve stem, and the plurality of positioning balls are arranged at an interval in the circumferential direction and stacked in the axial direction.

In the embodiments of the present application, a stem bushing is fitted outside of the valve stem, and an outer circumferential wall of the stem bushing is in contact with the positioning balls.

In the embodiments of the present application, at the pressure end, a pressure end mounting base extending radially inwards is formed on the inner wall of the casing of the storage tank breather valve, the valve seat of the pressure end sealing structure is seated on and securely fastened to the periphery of the base body of the pressure end mounting base, and an annular seal ring is provided at the bottom of the valve seat where the bottom of the valve seat contacts with the periphery of the base body.

In the embodiments of the present application, at the vacuum end, the storage tank breather valve further comprises:
a vacuum end mounting base that is arranged in the casing of the storage tank breather valve and used for mounting the vacuum end sealing structure, wherein a vacuum end valve hole is formed around the vacuum end mounting base;
a valve stem fixing disc that is arranged on a side of the vacuum end mounting base away from the valve disc of the vacuum end sealing structure and covers the vacuum end valve hole;
a valve stem positioning bushing penetrating the valve stem fixing disc, wherein the valve stem of the vacuum end sealing structure is connected to the valve disc through the valve stem positioning bushing;
a plurality of positioning balls arranged between the inner circumferential wall of the valve stem positioning bushing and the outer circumferential side of the valve stem, wherein the plurality of positioning balls are arranged at an interval in the circumferential direction and stacked in the axial direction.

In the embodiments of the present application, the valve seat of the vacuum end sealing structure is seated on and securely fastened to the periphery of the seat body of the vacuum end mounting base, and an annular seal ring is provided at the bottom of the valve seat where the bottom of the valve seat contacts with the periphery of the seat body.

In the embodiments of the present application, the storage tank breather valve further comprises:
a valve stem connected with the valve disc;
a valve stem positioning bushing fixedly arranged and fitted outside of the valve stem;
a plurality of positioning balls arranged between the inner circumferential wall of the valve stem positioning bushing and the outer circumferential side of the valve stem, wherein the plurality of positioning balls are arranged at an interval in the circumferential direction and stacked in the axial direction.

In the embodiments of the present application, the casing of the storage tank breather valve comprises a straight cylindrical section and a reduced section that is reduced in diameter inwards from the bottom of the straight cylindrical section, and the circumferential wall of the reduced section is formed as an arc wall.

In the embodiments of the present application, a vacuum cavity is formed inside the casing of the storage tank breather valve at the vacuum end, and the storage tank breather valve further comprises a vacuum firestop plate located at a lateral side of the vacuum cavity and embedded in a sidewall of the casing, and a sidewall of the vacuum cavity away from the vacuum firestop plate is an arc wall.

In the embodiments of the present application, the storage tank breather valve further comprises a vacuum rain cover that is arranged outside the vacuum firestop disc and is in an arc shape.

In a third aspect, the present application provides a storage tank, which comprises the storage tank breather valve described above.

It is seen from the above technical scheme: the sealing structure comprises a valve seat, a valve disc and a flexible sealing diaphragm, wherein the valve seat and the valve disc are arranged opposite to each other and used for fitted sealing against each other, a fitted sealing surface of one of the valve disc and the valve seat is provided with an inner annular groove and an outer annular groove surrounding the inner annular groove, and a fitted sealing side of the other of the valve disc and the valve seat is provided with an inner annular sealing protrusion arranged in alignment to the inner annular groove and an outer annular sealing protrusion arranged in alignment to the outer annular groove; the flexible sealing diaphragm is arranged on the fitted sealing surface and covers the inner annular groove and the outer annular groove; wherein, when the valve seat and the valve disc are in a fitted sealing state, the inner annular sealing protrusion at least partially extends into the inner annular groove and the outer annular sealing protrusion at least partially extends into the outer annular groove, and the flexible sealing diaphragm, which is pushed by respective protrusion tips of the inner annular sealing protrusion and the outer annular sealing protrusion, elastically extends towards the inner annular groove and the outer annular groove, so that the sealing structure forms an efficient dual-seal, and the sealing performance is greatly improved. When the sealing structure is applied to a storage tank breather valve, the probability of leakage from the storage tank breather valve can be effectively decreased, the safety and environmental protection performance of the storage tank breather valve is improved, and personal safety and property safety can be ensured.

Other features and advantages of the embodiments of the present application will be described in detail below.

### Brief Description of Drawings

The accompanying drawings are provided herein to facilitate further understanding on the present disclosure and constitute a part of this specification. They are used in conjunction with the following embodiments to explain the present disclosure, but are not intended to constitute any limitation on the present disclosure. In the figures:
Fig. 1 is a schematic partial structural view of the sealing structure at the pressure end of the storage tank breather valve in an embodiment of the present application;
Fig. 2 is a schematic structural view of the valve disc from a first perspective in an embodiment of the present application;
Fig. 3 is a schematic structural view of the valve disc from a second perspective in an embodiment of the present application;
Fig. 4 is a schematic structural view of the flexible sealing diaphragm in an embodiment of the present application;
Fig. 5 is a schematic structural view of the sealing structure at the pressure end of the storage tank breather valve in an embodiment of the present application;
Fig. 6 is a schematic structural view of the positioning mechanism at the pressure end of the storage tank breather valve in an embodiment of the present application;
Fig. 7 is a schematic structural view of the sealing structure at the vacuum end of the storage tank breather valve in an embodiment of the present application;
Fig. 8 is a schematic structural view of the positioning mechanism at the vacuum end of the storage tank breather valve in an embodiment of the present application;
Fig. 9 is a schematic structural view of an atmospheric type storage tank breather valve in an embodiment of the present application; and
Fig. 10 is a schematic structural view of an piping connection type storage tank breather valve in an embodiment of the present application.

### Detailed Description of the Embodiments

Some embodiments of the present application will be described in detail below with reference to the accompanying drawings. It may be understood that the embodiments described herein are only intended to describe and explain the present application rather than constitute any limitation on the present application.

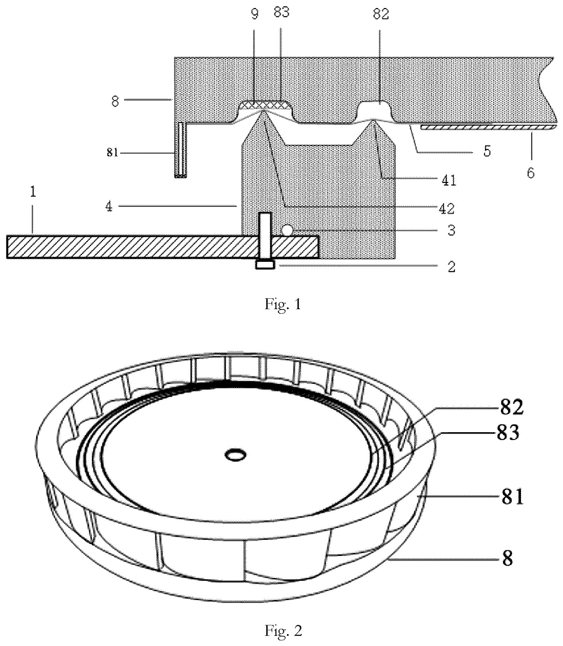

The present application discloses a novel sealing structure for a storage tank breather valve. As shown in Figs. 1, 5 and 7, in a specific embodiment, the sealing structure comprises:
a valve seat 4 and a valve disc 8, which are arranged opposite to each other and used for fitted sealing against each other, wherein a fitted sealing surface of one of the valve disc 8 and the valve seat 4 is provided with an inner annular groove 82 and an outer annular groove 83 surrounding the inner annular groove 82, and a fitted sealing side of the other of the valve disc 8 and the valve seat 4 is provided with an inner annular sealing protrusion 41 arranged in alignment to the inner annular groove 82 and an outer annular sealing protrusion 42 arranged in alignment to the outer annular groove 83;
a flexible sealing diaphragm 5 arranged on the fitted sealing surface and covers the inner annular groove 82 and the outer annular groove 83;
wherein, when the valve seat 4 and the valve disc 8 are in a fitted sealing state, the inner annular sealing protrusion 41 at least partially extends into the inner annular groove 82, the outer annular sealing protrusion 42 at least partially extends into the outer annular groove 83, and the flexible sealing diaphragm 5, which is pushed by respective protrusion tips of the inner annular sealing protrusion 41 and the outer annular sealing protrusion 42, elastically extends towards the inner annular groove 82 and the outer annular groove 83.

The present application aims to improve the sealing performance of a sealing structure. Specifically, in a case that both the inner annular groove 82 and the outer annular groove 83 are formed in the valve disc 8, the inner annular sealing protrusion 41 and the outer annular sealing protrusion 42 are correspondingly formed on the valve seat 4, with the openings of the inner annular groove 82 and the outer annular groove 83 facing downwards, and the flexible sealing diaphragm 5 is arranged on the top wall of an internal cavity of the valve disc 8 and covers the openings of the inner annular groove 82 and the outer annular groove 83 at the same time. When the valve disc 8 is moved downwards to get close to the valve seat 4, the inner annular sealing protrusion 41 and the outer annular sealing protrusion 42 on the valve seat 4 can at least partially extend upwards into the inner annular groove 82 and the outer annular groove 83 respectively; at that point, the inner annular sealing protrusion 41 and the outer annular sealing protrusion 42 work with the flexible sealing diaphragm 5 to form a first sealing structure and a second sealing structure respectively; alternatively, in a case that both the inner annular groove 82 and the outer annular groove 83 are formed in the valve seat 4, the inner annular sealing protrusion 41 and the outer annular sealing protrusion 42 are correspondingly formed on the valve disc 8, and the openings of the inner annular groove 82 and the outer annular groove 83 face upwards, and the flexible sealing diaphragm 5 is arranged on the top wall of the valve seat 4 and covers the openings of the inner annular groove 82 and the outer annular groove 83 at the same time; When the valve disc 8 is moved downwards to get close to the valve seat 4, the inner annular sealing protrusion 41 and the outer annular sealing protrusion 42 on the valve disc 8 can at least partially extend upwards into the inner annular groove 82 and the outer annular groove 83; at that point, the inner annular sealing protrusion 41 and the outer annular sealing protrusion 42 work with the flexible sealing diaphragm 5 to form a first sealing structure and a second sealing structure respectively. In this embodiment, the first sealing structure and the second sealing structure jointly form an efficient dual-seal, thereby the sealing performance is greatly improved. When the sealing structure is applied to a storage tank breather valve, the probability of leakage from the storage tank breather valve can be effectively decreased, the safety performance and environmental protection performance of the storage tank breather valve are improved, and personal safety and property safety can be ensured.

In an embodiment of the present application, one inner annular groove 82, one outer annular groove 83, one inner annular sealing protrusion 41 and one outer annular sealing protrusion 42 are provided respectively, or a plurality of inner annular grooves 82, a plurality of outer annular grooves 83, a plurality of inner annular sealing protrusions 41 and a plurality of outer annular sealing protrusions 42 are provided and arranged in a form of concentric circles respectively.

Specifically, in this embodiment, more than one inner annular grooves 82 and more than one outer annular groove 83 may be provided, i.e., the sealing structure is not limited to a dual sealing structure, two, three, four, or more inner annular grooves 82 and two, three, four, or more outer annular grooves 83 may be provided; correspondingly, two, three, four or more inner annular sealing protrusions 41 and two, three, four or more outer annular sealing protrusions 42 may be provided.

In an embodiment of the present application, the inner annular groove 82 and the outer annular groove 83 are formed in the fitted sealing surface of the valve disc 8 in a recessed form, the flexible sealing diaphragm 5 covers the fitted sealing surface of the valve disc 8, and the inner annular sealing protrusion 41 and the outer annular sealing protrusion 42 are formed on a fitted sealing side of the valve seat 4.

Optionally, the flexible sealing diaphragm 5 is pressed against the fitted sealing surface of the valve disc 8 by a circular membrane fixing plate 6.

Specifically, the sealing structure in this embodiment further comprises a circular membrane fixing plate 6 and valve disc fastening screws 7, wherein the circular diaphragm retaining plate 6 is arranged below the flexible sealing diaphragm 5 and covers a part of the flexible sealing diaphragm 5 from inside to outside in the radial direction, and the valve disc fastening screws 7 are inserted through the circular diaphragm retaining plate 6 and connected to the valve disc 8, so as to realize the mounting of the flexible sealing diaphragm 5; when the valve disc 8 is moved downwards to get close to the valve seat 4, the inner annular sealing protrusion 41 and the outer annular sealing protrusion 42 on the valve seat 4 can at least partially extend upward into the inner annular groove 82 and the outer annular groove 83; at that point, the flexible sealing diaphragm 5 is adaptively depressed upwards and elastically deformed at positions corresponding to the inner annular sealing protrusion 41 and the outer annular sealing protrusion 42 are adaptively depressed upward and elastically deformed, and the flexible sealing diaphragm 5 works with the inner annular sealing protrusion 41 and the outer annular sealing protrusion 42 at the above-mentioned two positions with elastic deformations to form a first sealing structure and a second sealing structure.

In an embodiment of the present application, the protrusion tips of the inner annular sealing protrusion 41 and the outer annular sealing protrusion 42 are formed as sharp-angled ends for pushing the flexible sealing diaphragm 5, and the tip contact surface of the sharp-angled end contacting with the flexible sealing diaphragm 5 is formed as an arc surface;
optionally, an internal angle of the sharp-angled end is within a range of 45° to 75°;
optionally, an arc diameter of the arc surface is within a range of 0.1 mm to 0.3 mm.

Specifically, the cross sections of the inner annular sealing protrusion 41 and the outer annular sealing protrusion 42 may be triangular or trapezoidal, and the top ends of the annular sealing protrusions in either of the above-mentioned shapes can form sharp-angled ends, which may result in greater deformation of the flexible sealing diaphragm 5 when the valve disc 8 gets close to the valve seat 4, which is helpful for further improving the sealing effect of the sealing structure. Furthermore, in this embodiment, the cross sections of the inner ring sealing protrusion 41 and the outer ring sealing protrusion 42 are preferably triangular, and the internal angle of the sharp-angled end (in this embodiment, the internal angle refers to the smaller one of two included angles between the vertically opposing sidewalls of the sharp-angled end) is preferably 60°C, and the sharp-angled end is rounded to form an arc surface having an arc diameter within a range of 0.1 mm to 0.3 mm. In the above structural arrangement, damages to the flexible sealing diaphragm 5 as a result of stress concentration can be avoided when the inner annular sealing protrusion 41 and the outer annular sealing protrusion 42 push the flexible sealing diaphragm 5 upwards.

In an embodiment of the present application, the height of protrusion of the outer annular sealing protrusion 42 is greater than that of the inner annular sealing protrusion 41;
optionally, a difference between the height of protrusion of the outer annular sealing protrusion 42 and the height of protrusion of the inner annular sealing protrusion 41 is within a range of 0.1 mm to 0.8 mm.

Specifically, the height of the inner annular sealing protrusion 41 is within a range of 2.4 mm to 3.2 mm; in this embodiment, the height of the inner annular sealing protrusion 41 is preferably 2.8 mm; the height of the outer annular sealing protrusion 42 is within a range of 2.8 mm to 3.6 mm; in this embodiment, the height of the outer annular sealing protrusion 42 is preferably 3.2 mm. In the above arrangement, the overall sealing performance can be improved by forming a second sealing structure having stronger sealing performance on the premise that the first sealing structure has sufficiently high sealing performance.

In addition, when the sealing structure having the inner annular sealing protrusion 41 and the outer annular sealing protrusion 42 in the above protrusion height arrangement is applied to a storage tank breather valve, even if the valve disc 8 undergoes eccentric displacement and angular deflection (i.e., the radially opposing sides of the valve disc 8 are at different elevations) under the upward impact of the gas flow in the storage tank breather valve, the above structural arrangement is still beneficial to ensure that the outer annular sealing protrusion 42 partially extends into the outer annular groove 83, i.e., the flexible sealing diaphragm 5 is pushed by the protrusion tip of the outer annular sealing protrusion 42 and elastically extends into the outer annular groove 83 if the inner annular sealing protrusion 41 on the higher side exits the inner annular groove 82 at that point, which is to say, the sealing structure can still ensure satisfactory sealing performance without gas leakage; furthermore, if a plurality of inner annular grooves 82, a plurality of annular grooves 83, a plurality of inner annular sealing protrusions 41 and a plurality of outer annular sealing protrusions 42 are provided, the production cost will be increased, and it will be difficult to ensure that all the sealing protrusions can extend into corresponding annular grooves at the same time because of the height difference between the sealing protrusions in the radial direction and the limited depth of the annular grooves; therefore, it is difficult to improve the sealing performance of the sealing structure in direct proportion to the number of sealing protrusions and the number of annular grooves. Hence, preferably one inner annular groove 82, one outer annular groove 83, one inner annular sealing protrusion 41 and one outer annular sealing protrusion 42 are provided on the premise that the production cost is controlled and the sealing structure achieves an adequate sealing effect.

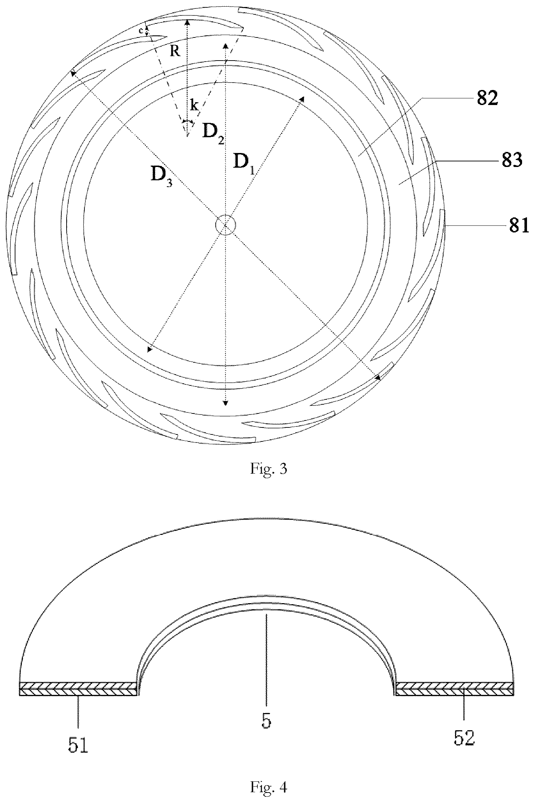

Furthermore, in this embodiment, the diameter of the inner annular sealing protrusion 41 is consistent with the inner diameter of the interface flange of the storage tank breather valve; the diameter of the inner annular sealing protrusion 41 is denoted as D, and the difference between the diameter of the outer annular sealing protrusion 42 and the diameter of the inner annular sealing protrusion 41 is within a range of 14 mm to 30 mm; optionally, the difference between the diameter of the outer annular sealing protrusion 42 and the diameter of the inner annular sealing protrusion 41 in this embodiment is 20 mm; the width of the inner annular groove 82 is preferably 6 mm, the depth of the inner annular groove 82 is preferably 2.8 mm, and the diameter D1 of the central circular line of the inner annular groove 82 is equal to D; the difference between the diameter D2 of the central circular line of the outer annular groove 83 and the diameter D1 of the central circular line of the inner annular groove 82 is within a range of 14 mm to 30 mm; optionally, the difference between the diameter D2 of the central circular line of the outer annular groove 83 and the diameter D1 of the central circular line of the inner annular groove 82 in this embodiment is 20 mm; the width of the outer annular groove 83 is preferably 10 mm, and the depth of the outer annular groove 83 is preferably 2.8 mm, as shown in Fig. 3.

In an embodiment of the present application, the sealing structure further comprises:
a cushion ring 9 arranged in the recess of the outer annular groove 83, wherein the protrusion tip of the outer annular sealing protrusion 42 pushes the flexible sealing diaphragm 5 towards the direction of the cushion ring 9;
optionally, the cushion ring 9 is made of polyurethane elastomer.

Specifically, the cushion ring 9 in this embodiment is a non-Newtonian fluid cushion ring made of polyurethane elastomer, which has a characteristic that an object will sink into the cushion ring slowly when it touches the cushion ring slightly but will be bounced back quickly when it impacts the cushion ring strongly, i.e., the cushion ring 9 can slowly contain the outer annular sealing protrusion 42 when the valve disc 8 is in a static state, and can protect the flexible sealing diaphragm 5 when there is high-impact sitting load after the valve disc 8 is opened, thereby can reduce the impact loss.

In an embodiment of the present application, a sidewall of the inner annular groove 82 and a sidewall of the outer annular groove 83 are formed into a smooth arc transition respectively at a corner junction with the fitted sealing surface of the valve disc 8;
optionally, an arc angle of the transition arc is within a range of 1.1 rads to 1.2 rads.

Specifically, the vertical sidewalls of the inner annular groove 82 and the outer annular groove 83 are formed into smooth arc transitions to the top wall of the internal cavity of the valve disc 8 (i.e., the fitted sealing surface of the valve disc 8) at corner positions. When the flexible sealing diaphragm 5 sinks into the inner annular groove 82 and the outer annular groove 83, the above arrangement can reduce the pressure on the flexible sealing diaphragm 5 from two sides of the bottom ends of the inner annular groove 82 and the outer annular groove 83, thereby reduce the wear on the flexible sealing diaphragm 5; furthermore, in this embodiment, the arc angles of the arc transitions are 1.15 rads;
furthermore, a smooth arc transition is also formed at the corner junction between the sidewall of the inner annular groove 82 and the top wall of the inner annular groove 82; a smooth arc transition is also formed at the corner junction between the sidewall of the outer annular groove 83 and the top wall of the outer annular groove 83, and the arc angles of the two arc transitions are within a range of 1.1 rads to 1.2 rads respectively; furthermore, in this embodiment, the arc angles of the above two arc transitions are 1.15 rads respectively.

In an embodiment of the present application, as shown in Fig. 4, the flexible sealing diaphragm 5 comprises a polymer sheet layer 51 and a fluororubber composite layer 52 that are laminated together;
optionally, the fluororubber composite layer 52 is made of a raw material composition containing fluororubber, an inorganic filler, an acid absorber, a vulcanizing agent, a release agent and a colorant;
optionally, the polymer sheet that forms the polymer sheet layer 51 is selected from one or more of polyetheretherketone, polytetrafluoroethylene and polyimide;
optionally, the polymer sheet layer 51 is in thickness of 0.1 mm to 1 mm;
optionally, the ratio of the thickness of the polymer sheet layer 51 to the thickness of the fluororubber composite layer 52 is within a range of 1:1 to 1:4;
optionally, the flexible sealing diaphragm 5 is in an annular shape.

Specifically, in the flexible sealing diaphragm 5, the polymer sheet layer 51 plays a supporting role, so as to prevent the diaphragm from drooping from the soft edge, which may result in degraded sealing performance and gas leakage through the storage tank breather valve; a lubricant and a thermally conductive agent are added in the pretreatment of the polymer sheet, so that the polymer sheet has high lubricity, high thermal conductivity and high friction resistance; the fluororubber composite layer 52 has excellent elasticity and appropriate elastic deformation, providing excellent sealing performance for the storage tank breather valve; the leakage of the storage tank breather valve can be greatly reduced by using the polymer sheet layer 51 and the fluororubber composite layer 52 in combination; in addition, the sealing diaphragm 5 made of the above materials further has high durability and ductility, which are beneficial to a long-term sealing effect of the sealing structure and further improve the service reliability of the storage tank breather valve.

In specific embodiments, the thickness of the polymer sheet layer 51 may be 0.1 mm, 0.2 mm, 0.3 mm, 0.4 mm, 0.5 mm, 0.6 mm, 0.7 mm, 0.8 mm, 0.9 mm or 1 mm.

In the flexible sealing diaphragm 5, in order to meet the basic use requirements, the thicknesses of the polymer sheet layer 51 and the fluororubber composite layer 52 may satisfy a certain relationship. In specific embodiments, the thickness of the fluororubber composite layer 52 is equivalent to that of the polymer sheet layer 51, or the thickness of the fluororubber composite layer 52 is greater than that of the polymer sheet layer 51. In a preferred embodiment, the ratio of the thickness of the polymer sheet layer 51 to the thickness of the fluororubber composite layer 52 is within a range of 1:1 to 1:4, specifically, the ratio may be 1:1, 1:1.2, 1:1.4, 1:1.5, 1:1.6, 1:1.8,1:2, 1:2.2, 1:2.4, 1:2.5, 1:2.6, 1:2.8, 1:3, 1:3.2, 1:3.4, 1:3.6, 1:3.8 or 1:4, for example.

In the flexible sealing diaphragm 5, the polymer sheet layer 51 is made of a polymer sheet. In specific embodiments, the polymer sheet forming the polymer sheet layer 51 may be a material familiar to those skilled in the art. Specifically, the polymer sheet may be selected from one or more of polyetheretherketone (PEEK), polytetrafluoroethylene (PTFE) and polyimide (PI), and most preferably is polytetrafluoroethylene.

In an alternative embodiment, the polymer sheet layer 51 is entirely made of a polymer sheet, and the polymer sheet may be pretreated before it can be used. The pretreatment process comprises: adding a lubricant and a thermally conductive agent to improve the lubricity, thermal conductivity and friction resistance of the polymer sheet, and treating the surfaces of the polymer sheet.

In the flexible sealing diaphragm 5, the inventor of the present application has found through research that the composite diaphragm composed of the fluororubber composite layer 52 prepared from a raw material containing fluororubber and the polymer sheet layer 51 can greatly reduce the leakage when it is used as a sealing material for the storage tank breather valve. In the present application, the fluororubber composite layer 52 is made of a raw material composition containing fluororubber, an inorganic filler, an acid absorber, a vulcanizing agent, a release agent and a colorant. The fluororubber composite layer 52 is obtained from the raw material composition through mixing, refining, thermal bonding and vulcanization.

In an embodiment of the present application, the fluororubber can be any fluororubber well-known in the field, as long as it can maintain the shape and mechanical strength of a gasket in oil, acid and alkali environments. In a specific embodiment, in the raw material composition, the fluororubber may be fluororubber 26 and/or fluororubber 246.

In an embodiment of the present application, the inorganic filler may be an existing choice in the field, as long as it can be used to fill the rubber material. In a preferred embodiment, in order to make the flexible sealing diaphragm 5 have satisfactory yield deformation within a leakage range from 0.75 times of the opening pressure of the storage tank breather valve to the opening pressure and further reduce the leakage from the storage tank breather valve, in the raw material composition, the inorganic filler is selected from one or more of white carbon black, calcium silicate, magnesium silicate, aluminum silicate, calcium carbonate, barium sulfate, diatomite, graphite, silicon nitride and boron nitride.

In an embodiment of the present application, the acid absorber refers to an additive capable of absorbing the acidic substances released in the process of rubber preparation. The acid absorber may be an existing choice in the art, as long as it can absorb the acidic substances released in the process of rubber preparation. In a preferred embodiment, in the raw material composition, the acid absorber is selected from one or more of magnesium oxide, calcium oxide, zinc oxide and calcium hydroxide.

In an embodiment of the present application, the vulcanizing agent may be an existing choice in the art. In a specific embodiment, in the raw material composition, the vulcanizing agent is selected from one or more of N,N'-Dicinnamylidene-1,6-hexanediamine, 2,2-Bis(4-hydroxyphenyl)hexafluoropropane, dicumyl peroxide and 2,5-Dimethyl-2,5-di(tert-butylperoxy)hexane.

In an embodiment of the present application, the release agent may be any release agent well known to those skilled in the art. In a specific embodiment, in the raw material composition, the release agent is selected from one or more of zinc stearate, ammonium stearate and paraffin wax.

In an embodiment of the present application, the colorant may be any colorant well known to those skilled in the art, as long as it can stain the composite membrane. In a specific embodiment, in the raw material composition, the colorant is selected from one or more of iron red, colloidal graphite and carbon black.

In an embodiment of the present application, in order to improve the yield recovery property of the fluororubber composite layer 52 and further reduce the leakage from the storage tank breather valve, it is necessary to reasonably control the dosage of the fluororubber, the inorganic filler, the acid absorber, the vulcanizing agent, the release agent and the colorant. In a specific embodiment, in the raw material composition, a weight ratio of the fluororubber to the inorganic filler to the acid absorber to the vulcanizing agent to the release agent to the colorant may be 100:(10~60):(0.001~20):(0.001~5):(0.2~2):(0.001~3).

In an embodiment of the present application, whether or not to add a vulcanization accelerator to the raw material for preparing the fluororubber composite layer 52 is determined according to the actual requirement. In a specific embodiment, the raw material composition further contains a vulcanization accelerator. In a preferred embodiment, a weight ratio of the fluororubber to the vulcanization accelerator is 100:0.001-2; specifically, the weight ratio may be 100:0.001, 100:0.1, 100:0.2, 100:0.5, 100:0.6, 100:0.7, 100:0.8, 100:0.9 or 100:1, for example. The vulcanization accelerator is preferably triallyl isocyanurate.

In the sealing structure of the present application, the hardness of the flexible sealing diaphragm 5 is preferably HR50 - HR75, most preferably HR60.

In the sealing structure of the present application, the size design of the annular flexible sealing diaphragm 5 ensures that it can cover all annular grooves in the valve disc 8.

In the sealing structure of the present application, there is no particular restriction on the coverage of the flexible sealing diaphragm 5, as long as all annular grooves in the valve disc 8 can be fully covered. Preferably, the coverage of the flexible sealing diaphragm 5 is such that the outer circumference and the inner circumference of the flexible sealing diaphragm 5 can still fully cover the outermost annular groove and the innermost annular groove in the valve disc 8 respectively when the sealing protrusions on the valve seat 4 fully enter the annular grooves in the valve disc 8. In some embodiments, in a case that the flexible sealing diaphragm 5 is annular, the diameter of the outer circumference of the flexible sealing diaphragm 5 is greater than the outer diameter of the outermost annular groove in the valve disc 8 by 1 mm to 30 mm, preferably greater by 5 mm - 20 mm; the diameter of the inner circumference of the flexible sealing diaphragm 5 is smaller than the inner diameter of the innermost annular groove in the valve disc 8 by 1 mm - 30 mm, preferably smaller by 5 mm - 20 mm.

In the sealing structure of the present application, the valve disc 8 is a rotary-wing valve disc that can be driven by the overflowing gas flow to spin. As shown in Figs. 2 and 3, as an example, the rotary-wing valve disc comprises:
a disc body, wherein the inner annular groove 82 and the outer annular groove 83 are formed in a disc surface of the disc body;
a rotary-wing ring, which is pendent downwards from the periphery of the disc body and comprises a plurality of rotary wings 81 arranged at an interval in a circumferential direction, with a clearance gas flow passage formed between every two adjacent rotary wings 81, wherein the valve disc 8 can be driven to spin by the overflowing gas flow flowing through the clearance gas flow passages from inside to outside;
optionally, an arc angle of the rotary wing is within a range of 0.3 rads to 0.4 rads;
optionally, there are 15-20 rotary wings;
optionally, the width of the clearance gas flow passage is within a range of 3 mm to 6 mm.

Specifically, as shown in Figs. 2 and 3, the valve disc 8 is an integral structure (i.e., the disc body and the rotary-wing ring are integrally formed), and may be made of a corrosion-resistant material, such as stainless steel or polyphenylene sulfide, and a difference between the outer diameter D3 of the valve disc 8 and the diameter D1 of the central circular line of the inner annular groove 82 is within a range of 40 mm to 60 mm; in this embodiment, preferably there are 17 rotary wings 81, and the radius of the rotary wings 81 is R, where R = (0.15 - 0.25) * D; every two adjacent rotary wings 81 are staggered in the circumferential direction of the valve disc 8; furthermore, in this embodiment, the width of the clearance gas flow passage is preferably 5 mm; the height of the rotary wings 81 is h, where h = 0.628 * (0.1 * D + 12); in the above design, the valve disc 8 can completely jump to a maximum height at 1.07 times of the opening pressure, and the rotation speed of the valve disc 8 can be within a range of 20 r/s - 30 r/s after it is opened, which is beneficial to keep the valve disc 8 self-stable, and the accumulated dirt and dust above the valve disc 8 can be removed under the centrifugal force to realize self-cleaning. Furthermore, a circular ring in width of 8 mm is arranged at a side end of each rotary wing 81 to connect all the rotary wings 81 together, so that the valve disc 8 can be maintained in an integral structure without deformation.

In another embodiment of the present application, in the direction from the inside to the outside, the clearance gas flow passage may be tapered (not shown in the figure), which is to say, the width of the clearance gas flow passage is gradually decreased from the inside to the outside, so that the pressure of the overflowing gas flow is higher at the radial outer end of the clearance gas flow passage, thereby the pressure on the sidewall of the clearance gas flow passage at the radial outer end is greater, which is more conducive to the spinning of the rotary-wing valve disc under the action of the overflowing gas flow.

When the sealing structure in the above embodiment is applied to a storage tank breather valve, the flexible sealing diaphragm 5 sinks into the inner annular groove 82 by 0.2 mm to 0.5 mm under the action of the inner annular sealing protrusion 41; the flexible sealing diaphragm 5 sinks into the outer annular groove 83 by 0.6 mm to 0.9 mm under the action of the outer annular sealing protrusion 42, thereby an efficient dual seal is formed, the leakage from the storage tank breather valve is effectively reduced by 95% under the joint action of the inner annular sealing protrusion 41 and the flexible sealing diaphragm 5 sinking into the outer annular groove 82, and effectively reduced by 99.9999% under the joint action of the outer annular sealing protrusion 42 and the flexible sealing diaphragm 5 sinking into the outer annular groove 83; besides, with the cushion ring 9 arranged in the outer annular groove 83, the outer annular sealing protrusion 42 can be slowly contained when the valve disc 8 is in a static state, thus, complete sealing between the valve disc 8 and the valve seat 4 is realized, and an effect of zero leakage is achieved.

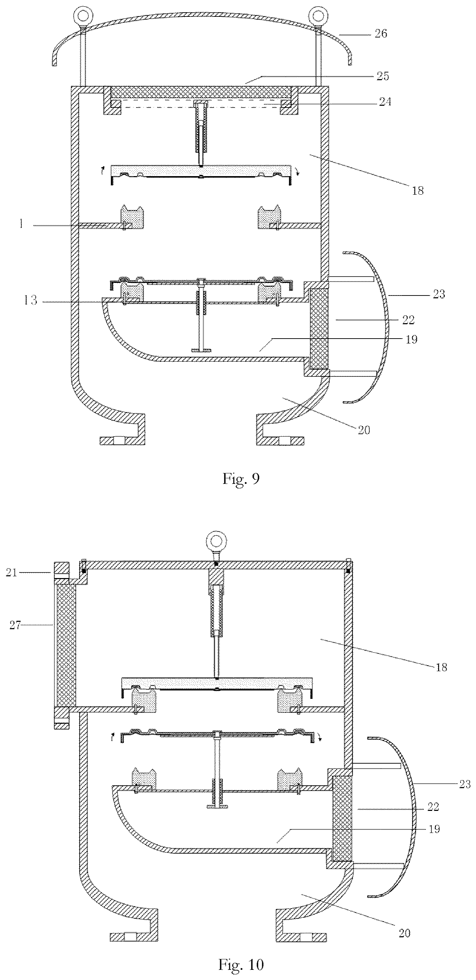

The present application further discloses a storage tank breather valve having a pressure end and a vacuum end therein. As shown in Figs. 9 to 10, the storage tank breather valve comprises the sealing structure described in the above embodiment, and the sealing structure is arranged at the pressure end and/or the vacuum end.

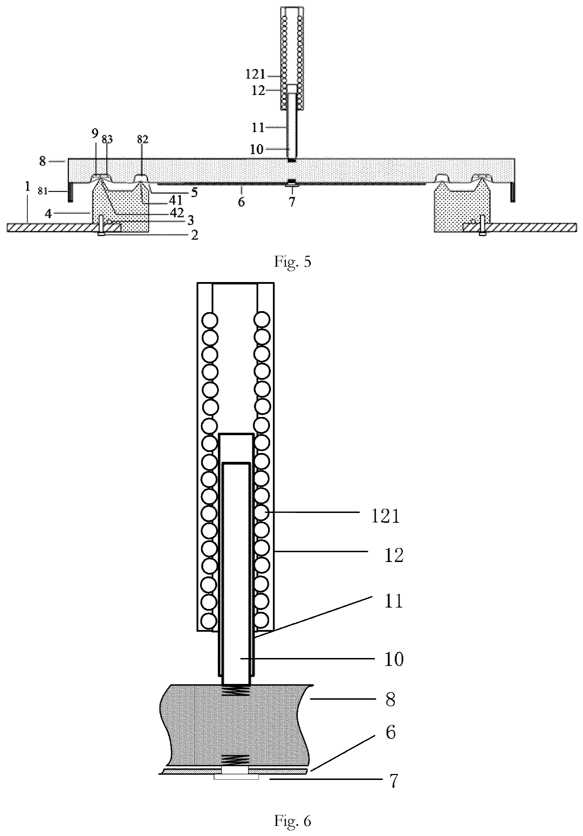

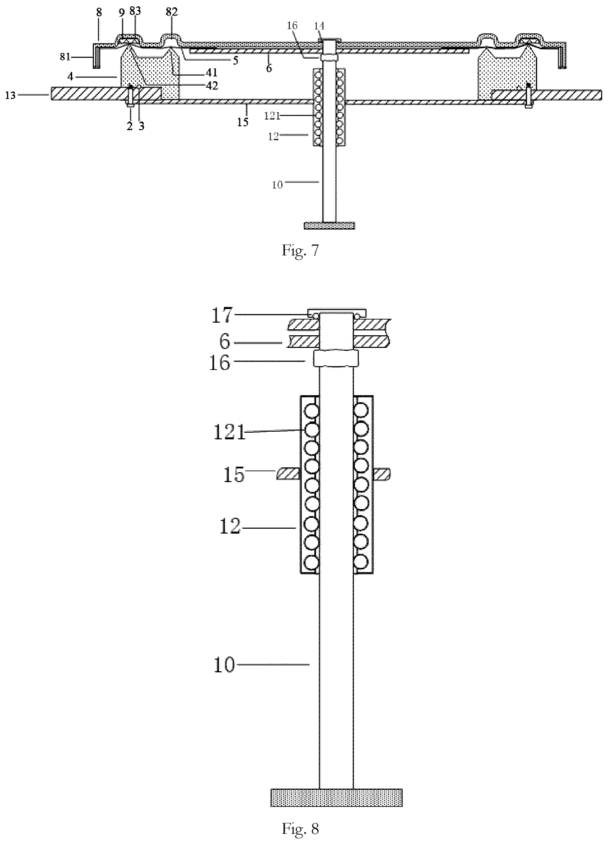

In an embodiment of the present application, as shown in Fig. 9 or Fig. 10, the sealing structure comprises a pressure end sealing structure (see Fig. 5) arranged at the pressure end and a vacuum end sealing structure (see Fig. 7) arranged at the vacuum end; the valve disc 8 of the sealing structure is connected with a valve stem 10, the valve stem 10 connected with the pressure end sealing structure extends from the disc surface of the valve disc 8 in a direction away from the valve seat 4, and the valve stem 10 connected with the vacuum end sealing structure extends from the disc surface of the valve disc 8 towards the valve seat 4.

Furthermore, at the pressure end, a pressure end mounting base 1 extending radially inwards is formed on the inner wall of the casing of the storage tank breather valve, the valve seat 4 of the pressure end sealing structure is seated on and securely fastened to the periphery of the base body of the pressure end mounting base 1, and an annular seal ring 3 is provided at the bottom of the valve seat 4 where the bottom of the valve seat 4 contacts with the periphery of the base body.

Specifically, the storage tank breather valve further comprises a casing, wherein a pressure cavity 18 and a vacuum cavity 19 located below the pressure cavity 18 are formed in the casing, the pressure end is located in the pressure cavity 18, and the vacuum end is located above the vacuum cavity 19; in the pressure end, a pressure end mounting base 1 is arranged in the storage tank breather valve, and a pressure end valve hole is formed in the pressure end mounting base 1, and a valve seat 4 is mounted in the pressure end valve hole, the valve seat 4 is integrally machined and molded, and the height of the valve seat 4 is within a range of 30 mm to 40 mm. In this embodiment, the height of the valve seat 4 is preferably 35 mm, which enables the valve seat 4 to maintain its strength and control the deformation of the valve seat 4 to be smaller than 0.1%; an annular seal ring 3 is provided at the bottom of the valve seat 4 where the bottom of the valve seat 4 contacts with the periphery of the seat body of the pressure end mounting base 1, and the valve seat 4 is fixed to the pressure end mounting base 1 by four valve seat fastening screws 2. The above structural design has the advantages of high sealing performance, high deformation resistance and convenient disassembly and reparation. In addition, the valve disc 8 in the pressure end is made of an entire piece of material, and the material of the valve disc 8 may be a corrosion-resistant material, such as stainless steel or polyphenylene sulfide.

At the pressure end, a valve stem positioning bushing 12 fitted outside of the valve stem 10 of the pressure end sealing structure is fixedly arranged in the storage tank breather valve, as shown in Fig. 6, a plurality of positioning balls 121 are provided between an inner circumferential wall of the valve stem positioning bushing 12 and an outer circumferential side of the valve stem 10, and the plurality of positioning balls 121 are arranged at an interval in the circumferential direction and stacked in the axial direction.

Specifically, at the pressure end, the valve stem 10 is arranged above the valve disc 8 and connected to the center of the top surface of the valve disc 8 by threads, the valve stem 10 is made of stainless steel, and the upper end of the valve stem positioning bushing 12 is connected to the casing of the storage tank breather valve, the valve stem positioning bushing 12 is located in the middle of the pressure cavity 18 in the lateral direction and is used for controlling the displacement of the valve stem 10; in the vertical direction, there are 5 to 20 rows of positioning balls 121; in the circumferential direction, four positioning balls 121 are evenly distributed at an interval, and the positioning balls 121 are made of ceramics, and the size of the positioning balls 121 is within a range of 2 mm to 4 mm. In the above arrangement, the positioning balls 121 in the valve stem positioning bushing 12 can effectively convert any lateral stress on the valve stem 10 in the pressure end into longitudinal stress, reduce the strain of the valve stem 10, avoid the eccentric rotation of the valve disc 8 at the pressure end, and maintain a coaxial deviation smaller than 0.05 mm when the valve disc 8 at the pressure end is seated, thereby the sealing effect between the valve disc 8 and the valve seat 4 at the pressure end can be further improved.

Furthermore, at the pressure end, the central axes of the valve stem positioning bushing 12, the valve disc 8 and the pressure end valve hole coincide with each other.

In an embodiment of the present application, a stem bushing 11 is fitted outside of the valve stem 10, and an outer circumferential wall of the stem bushing 11 is in contact with the positioning balls 121.

Specifically, the stem bushing 11 is made of a PEEK composite graphite material, which can avoid the corrosion of the valve stem 10 caused by the medium exhaled from the storage tank breather valve; besides, the stem bushing 11 made of the above-mentioned material has excellent self-lubrication, electrostatic conductivity and low-temperature resistance properties, so that the storage tank breather valve can be used normally in a low temperature environment at -40°C; moreover, the distance between the stem bushing 11 and the positioning balls 121 is 0.1 mm, and the positioning balls 121 can effectively convert any lateral stress on the stem bushing 11 and the valve stem 10 in the pressure end into longitudinal stress, so as to avoid eccentric rotation of the valve disc 8 at the pressure end.

In an embodiment of the present application, at the vacuum end, the storage tank breather valve further comprises:
a vacuum end mounting base 13 that is arranged in the casing of the storage tank breather valve and used for mounting the vacuum end sealing structure, wherein a vacuum end valve hole is formed around the vacuum end mounting base 13;
a valve stem fixing disc 15 that is arranged on a side of the vacuum end mounting base 13 away from the valve disc 8 of the vacuum end sealing structure and covers the vacuum end valve hole;
a valve stem positioning bushing 12 penetrating the valve stem fixing disc 15, wherein the valve stem 10 of the vacuum end sealing structure is connected with the valve disc 8 through the valve stem positioning bushing 12;
a plurality of positioning balls 121 arranged between the inner circumferential wall of the valve stem positioning bushing 12 and the outer circumferential side of the valve stem 10, wherein the plurality of positioning balls 121 are arranged at an interval in the circumferential direction and stacked in the axial direction.

Specifically, a vacuum end mounting base 13 is arranged below the pressure end mounting base 1 in the storage tank breather valve, a vacuum end valve hole is formed in the vacuum end mounting base 13, and the valve seat 4 is mounted in the vacuum end valve hole and fixed to the vacuum end mounting base 13 by four valve seat fastening screws 2; the valve disc 8 at the vacuum end is made of a corrosion-resistant material such as stainless-steel sheet or polyphenylene sulfide by stamping to meet the requirement for an opening pressure of -300 Pa.

As shown in Figs. 7 and 8, at the vacuum end, the storage tank breather valve further comprises a pressing end cap 14 located above the center of the valve disc 8, a valve stem fixing disc 15 is fixed below the vacuum end mounting base 13 by fastening screws, the valve stem 10 in the vacuum end is an I-shaped valve stem, and a valve stem positioning bushing 12 is arranged at the center of the valve stem fixing disc 15; the upper end of the valve stem 10 passes through the valve stem positioning bushing 12, the circular membrane retaining plate 6 and the valve disc 8 from bottom to top and is connected with the pressing end cap 14; a fastening nut 16 located below the circular membrane retaining plate 6 is fitted outside of the valve stem 10, and the fastening nut 16 and the pressing end cap 14 work together for fastening the valve stem 10, the circular membrane retaining plate 6 and the valve disc 8; in the vertical direction, there are 5 to 9 rows of positioning balls 121; in the circumferential direction, four positioning balls 121 are evenly distributed at an interval, the positioning balls 121 are made of ceramics, and in size within a range of 2 mm to 4 mm, and the distance between the valve stem 10 and the positioning balls 121 is 0.1 mm. In the above arrangement, the positioning balls 121 in the valve stem positioning bushing 12 can effectively convert any lateral stress on the valve stem 10 in the vacuum end into longitudinal stress, so as to disperse the rigid stress and reduce the strain of the valve stem 10, which is beneficial for improving the durability of the valve stem 10 and the storage tank breather valve; in addition, the positioning balls 121 are also beneficial for reducing the movement resistance of the valve stem 10, thereby improving the smoothness of the rotation of the valve stem 10 and the valve disc 8, preventing the valve stem 10 from being stuck, and avoiding the eccentric rotation of the valve disc 8 at the vacuum end, so that the coaxial deviation of the valve disc 8 at the vacuum end can be maintained to be smaller than 0.05 mm when the valve disc 8 is seated, and the sealing effect between the valve disc 8 at the vacuum end and the valve seat 4 can be further improved.

Furthermore, at the vacuum end, the central axis of the valve stem fixing disc 15, the central axis of the valve disk 8 and the central axis of the vacuum end valve hole coincide with each other.

In an embodiment of the present application, the valve seat 4 of the vacuum end sealing structure is seated on and securely fastened to the periphery of the seat body of the vacuum end mounting base 13, and an annular seal ring is 3 provided at the bottom of the valve seat where the bottom of the valve seat 4 contacts with the periphery of the seat body.

Specifically, an annular seal ring 3 is provided at the bottom of the valve seat 4 of the vacuum end sealing structure where the bottom of the valve seat 4 contacts with the periphery of the seat body of the pressure end mounting base 13, and the valve seat 4 is fixed to the pressure end mounting base 13 by four valve seat fastening screws 2. The above structural design has the advantages of high sealing performance, high deformation resistance and convenient disassembly and reparation.

In an embodiment of the present application, at the vacuum end, the storage tank breather valve further comprises a seal provided at the top end of the valve stem 10 and used for sealing the clearance between the valve stem 10 and the valve disc 8. Specifically, the seal is an O-ring 17 arranged between the lower end face of the pressing end cap 14 and the top face of the valve disc 8. By tightening up the fastening nut 16, the O-ring 17 can be deformed to seal the clearance between the valve stem 10 and the valve disc 8.

In an embodiment of the present application, the opening pressure P1 of the storage tank breather valve at the pressure end is adjusted by means of the total weight M of the valve disc 8, the cushion ring 9, the flexible sealing diaphragm 5, the circular diaphragm retaining plate 6, the valve disc fastening screws 7, the valve stem 10 and the stem bushing 11, where P1 = 1.27 * Mg/D.

In an embodiment of the present application, the opening pressure P₂ (e.g., -300 Pa gauge pressure) of the storage tank breather valve at the vacuum end is adjusted by means of the total weight M of the valve disc 8, the cushion ring 9, the flexible sealing diaphragm 5, the circular diaphragm retaining plate 6, the fastening nut 16, the O-ring 17 and the valve stem 10, where P₂ = 1.27 * Mg/D.

In an embodiment of the present application, the storage tank breather valve further comprises an interface flange, a vacuum firestop disc 22, a vacuum rain cover 23, long fixing bolts and lifting lugs; a pressure cavity 18 and a vacuum cavity 19 located below the pressure cavity 18 are formed inside the casing, the pressure cavity 18 is at the pressure end, the vacuum cavity 19 at the vacuum end, and the sealing structure, the valve stem 10 and the valve stem positioning bushing 12, and the positioning balls 121, etc., in the embodiment described above are provided at the pressure end and the vacuum end;

furthermore, at the pressure end, a pressure end mounting base 1 extending radially inwards is formed on the inner wall of the casing of the storage tank breather valve, and a pressure end valve hole is formed on the pressure end mounting base 1; at the vacuum end, a vacuum end mounting base 13 for mounting the vacuum end sealing structure is formed in the casing of the storage tank breather valve, and a vacuum end valve hole is formed on the vacuum end mounting base 13; an air inlet is formed at the bottom of the casing of the storage tank breather valve, and the central axis of the pressure end valve hole, the central axis of the vacuum end valve hole and the central axis of the air inlet coincide with each other.

Specifically, the casing of the storage tank breather valve comprises a straight cylindrical section and a reduced section that is reduced in diameter inwards from the bottom of the straight cylindrical section; a circumferential wall of the reduced section is formed into an arc wall, the radius of the arc wall is D, and the arc angle of the arc wall is within a range of 0.4 rads to 0.6 rads, most preferably 0.53 rads, so as to realize gas flow with low pressure drop at the interface flange; the interface flange is arranged below the reduced section, and is provided with an air inlet for air flow into the storage tank breather valve; with the structural arrangement that the central axis of the air inlet, the central axis of the pressure end valve hole, and the central axis of the vacuum end valve hole coincides with each other, the air can flow stably into the storage tank breather valve via the air inlet of the interface flange, thus the shock and vibration of the storage tank breather valve can be reduced; moreover, the above structural design can avoid eccentric rotation of the valve disc 8. On that basis, the inner annular sealing protrusion 41 and the outer annular sealing protrusion 42 can simultaneously push the sealing diaphragm 5 and form a first sealing structure and a second sealing structure, thereby the sealing performance of the sealing structure is effectively ensured; the lifting lugs are arranged above the straight cylindrical section.

In an embodiment of the present application, a vacuum cavity 19 located at the vacuum end and an inner common cavity 20 in communication with the pressure cavity 18 are formed in the casing of the storage tank breather valve, and the storage tank breather valve further comprises a vacuum firestop disc 22 that is located at a lateral side of the vacuum cavity 19 and embedded in the sidewall of the casing, wherein a sidewall of the vacuum cavity 19 away from the vacuum firestop disc 22 is an arc wall with an arc angle within a range of 1 rad to 1.1 rads, most preferably 1.05 rads; when the inner diameter of the interface flange of the storage tank breather valve (i.e. the diameter of the air inlet of the storage tank breather valve) is D, the radius of the arc wall is preferably 0.5-0.75D, most preferably 2D/3. With that arrangement, the gas in the inner common cavity 20 can flow into the pressure cavity 18 uniformly, or the gas in the vacuum cavity 19 can flow into the inner common cavity 20 uniformly, so as to reduce pressure loss.

In an embodiment of the present application, the storage tank breather valve further comprises a vacuum rain cover that is arranged outside the vacuum firestop disc 22 and is in an arc shape. Specifically, the vacuum rain cover 23 is fixed to the casing by long fixing bolts and covers the outer side of the vacuum fire stop plate 22; when the inner diameter of the interface flange of the storage tank breather valve (i.e., the diameter of the air inlet of the storage tank breather valve) is D, the arc radius of the vacuum rain cover 23 is within a range of 1.4D to 1.6D, preferably 1.5D; the arc angle of the vacuum rain cover 23 is 1 rad to 1.2 rads, preferably 1.1 rads. The above-mentioned arrangement is beneficial for further reducing the loss of gas pressure when the storage tank breather valve breathes.

As shown in Fig. 9, as an example, the storage tank breather valve may further comprise a fixing cross ring 24, a pressure firestop disc 25 and a pressure rain cover 26, wherein the fixing cross ring 24 is arranged inside the casing and used for connecting the valve stem positioning bushing 12 to the casing, the pressure firestop disc 25 is arranged at the top of the casing and above the fixing cross ring 24, and the pressure rain cover 26 is fixed to the casing and above the pressure firestop disc 25 by long fixing bolts; when the inner diameter of the interface flange of the storage tank breather valve (i.e., the diameter of the air inlet of the storage tank breather valve) is D, the arc radius of the pressure rain cover 26 is within a range of 3.4D to 3.6D, preferably 3.5D; the arc angle of the pressure rain cover 26 is within a range of 0.7 rads to 0.8 rads, preferably 0.75 rads, which is beneficial for reducing the loss of gas pressure when the storage tank breather valve breathes; lifting lugs are arranged at the top of the pressure rain cover 26.

As shown in Fig. 10, the storage tank breather valve may further comprise a pressure pipe flame arrester 27 and a pipe flange 21, wherein the pressure pipe flame arrester 27 is arranged on the casing corresponding to the pressure cavity 18, the pipe flange 21 is arranged on the pressure pipe flame arrester 27, and lifting lugs are arranged at the top of the casing.

In another embodiment of the present application, a storage tank is provided, and the storage tank comprises the storage tank breather valve in the above embodiment.

The storage tank breather valve and the storage tank in the present application will be further explained in examples. The examples are implemented on the premise of the technical scheme of the present application, and detailed implementation steps and specific operation processes are provided in the examples, but the scope of protection of the present application is not limited to the following examples.

### Preparation Example 1

### (1) Preparation of a fluororubber composite material:

A fluororubber (10 Kg fluororubber 246), inorganic fillers (1 Kg calcium silicate, 1 Kg magnesium silicate, 0.5 Kg calcium carbonate and 0.1 Kg graphite), acid absorbers (0.5 Kg calcium oxide and 0.5 Kg calcium hydroxide), a vulcanizing agent (0.01 Kg 2,5-dimethyl-2,5-di-tert-butyl hexane peroxide), a vulcanization accelerator (0.01 Kg of triallyl isocyanurate), a release agent (0.01 Kg paraffin wax) and a colorant (0.15 Kg iron red) were added into a mixer for mixing at 50 rpm rotation speed at 70°C temperature for 30 minutes; then, the obtained product was refined for 30 times, with 1 mm roll pitch and 140°C roll temperature, thereby a fluororubber composite was obtained.

### (2) Preparation of a composite diaphragm:

The fluororubber composite was spread on a PTFE polymer sheet in 0.2 mm thickness for thermal bonding at 160°C temperature for 10 minutes to obtain a pre-vulcanized composite membrane, and then the membrane was vulcanized at 240°C for 16 hours to obtain a composite membrane consisting of a fluororubber composite layer in 0.7 mm thickness and a PTFE polymer sheet layer in 0.2 mm thickness.

### Example 1

As shown in Figs. 1 to 9, the casing of the storage tank breather valve comprises a straight cylindrical section and a reduced section that is reduced in diameter inwards from the bottom of the straight cylindrical section, an interface flange is arranged below the reduced section, a circumferential wall of the reduced section is formed into an arc wall, the radius of the arc wall is D and the arc angle of the arc wall is 0.53 rads, so as to realize gas flow with low pressure drop at the interface flange; lifting lugs are arranged above the straight cylindrical section; a pressure cavity 18, a vacuum cavity 19 and an inner common cavity 20 that can communicate with each other are formed in the casing, a pressure end is located in the pressure cavity 18 and a vacuum end is located above the vacuum cavity 19; a vacuum firestop disc 22 is located on a lateral side of the vacuum cavity 19 and embedded in the sidewall of the casing, a sidewall of the vacuum chamber 19 away from the vacuum firestop disc 22 is an arc wall with an arc angle equal to 1.05 rads; when the inner diameter of the interface flange of the storage tank breather valve (i.e., the diameter of the air inlet of the storage tank breather valve) is D, the radius of the arc wall is 2D/3; a fixing cross ring 24 is arranged inside the casing, a pressure firestop disc 25 is arranged at the top of the casing and above the fixing cross ring 24, and a pressure rain cover 26 is fixed to the casing and above the pressure firestop disc 25 by long fixing bolts; when the inner diameter of the interface flange of the storage tank breather valve (i.e., the diameter of the air inlet of the storage tank breather valve) is D, the arc radius of the pressure rain cover 26 is 3.5D; the arc angle of the pressure rain cover 26 is 0.75 rads; lifting lugs are arranged at the top of the pressure rain cover 26;

A pressure end sealing structure and a vacuum end sealing structure are provided at the pressure end and the vacuum end of the storage tank breather valve respectively, both the pressure end sealing structure and the vacuum end sealing structure comprise a valve seat 4, a valve disc 8 and a flexible sealing diaphragm 5, and the height of the valve seat 4 is 35 mm; an inner annular groove 82 and an outer annular groove 83 are formed in the fitted sealing surface of the valve disc 8, the flexible sealing diaphragm 5 covers the fitted sealing surface of the valve disc 8, an inner annular sealing protrusion 41 and an outer annular sealing protrusion 42 are formed on the fitted sealing side of the valve seat 4, and the flexible sealing diaphragm 5 is pressed against the fitted sealing surface of the valve disc 8 by means of a circular membrane retaining plate 6; the protrusion tips of the inner annular sealing protrusion 41 and the outer annular sealing protrusion 42 are formed as sharp-angled ends for pushing the flexible sealing diaphragm 5, and the tip contact surface of the sharp-angled end contacting with the flexible sealing diaphragm 5 is formed as an arc surface;

The cross sections of the inner annular sealing protrusion 41 and the outer annular sealing protrusion 42 are preferably triangular, and the internal angles of the sharp-angled ends are 60°; the height of protrusion of the outer annular sealing protrusion 42 is greater than that of the inner annular sealing protrusion 41; the height of protrusion of the inner annular sealing protrusion 41 is 2.8 mm; the height of protrusion of the outer annular sealing protrusion 42 is 3.2 mm, and the diameter of the inner annular sealing protrusion 41 is consistent with the inner diameter of the interface flange of the storage tank breather valve; the diameter of the inner annular sealing protrusion 41 is denoted as D, and a difference between the diameter of the outer annular sealing protrusion 42 and the diameter of the inner annular sealing protrusion 41 is 20 mm; the width of the inner annular groove 82 is 6 mm, the depth of the inner annular groove 82 is 2.8 mm, and the diameter D1 of the central circular line of the inner annular groove 82 is equal to D; a difference between the diameter D2 of the central circular line of the outer annular groove 83 and the diameter D1 of the central circular line of the inner annular groove 82 is 20 mm; the width of the outer annular groove 83 is 10 mm and the depth of the outer annular groove 83 is 2.8 mm;

The pressure end sealing structure and the vacuum end sealing structure further comprise a cushion ring 9 arranged in the recess of the outer annular groove 83 respectively, and the cushion ring 9 is a non-Newtonian fluid cushion ring made of polyurethane elastomer; a sidewall of the inner annular groove 82 and a sidewall of the outer annular groove 83 are formed into a smooth arc transition respectively at a corner junction with the fitted sealing surface of the valve disc 8, and the arc angle of the arc transition is 1.15 rads; the flexible sealing diaphragm 5 comprises a polymer sheet layer 51 and a fluororubber composite layer 52 that are laminated together; the fluororubber composite layer 52 is made of a raw material composition containing fluororubber, an inorganic filler, an acid absorber, a vulcanizing agent, a release agent and a colorant; the polymer sheet forming the polymer sheet layer 51 is selected from polyetheretherketone, polytetrafluoroethylene and polyimide; the thickness of the polymer sheet layer 51 is 0.1 mm; the ratio of the thickness of the polymer sheet layer 51 to the thickness of the fluororubber composite layer 52 is 1:1; the flexible sealing diaphragm 5 is in an annular shape; the hardness of the flexible sealing diaphragm 5 is HR60;

The valve disc 8 is a rotary-wing valve disc and comprises: a disc body, wherein the inner annular groove 82 and the outer annular groove 83 are formed in a disc surface of the disc body; a rotary-wing ring that is pendent downward from the periphery of the disc body and comprises a plurality of rotary wings 81 arranged at an interval in the circumferential direction, and a clearance gas flow passage is formed between every two adjacent rotary wings 81; the arc angle of the rotary wing is 0.35 rads; there are 17 rotary wings; the width of the clearance gas flow passage is 5 mm;

The valve disc 8 of the sealing structure is connected with a valve stem 10, which is made of stainless steel; the valve stem 10 connected with the pressure end sealing structure extends from the disc surface of the valve disc 8 in a direction away from the valve seat 4, and the valve stem 10 connected with the vacuum end sealing structure extends from the disc surface of the valve disc 8 towards the valve seat 4; at the pressure end, a pressure end mounting base 1 extending radially inwards is formed on the inner wall of the casing of the storage tank breather valve, the valve seat 4 of the pressure end sealing structure is seated on and securely fastened to the periphery of the base body of the pressure end mounting base 1, and an annular seal ring 3 is provided at the bottom of the valve seat 4 where the bottom of the valve seat 4 contacts with the periphery of the base body;

At the pressure end, a valve stem positioning bushing 12 fitted outside of the valve stem 10 of the pressure end sealing structure is fixedly arranged in the storage tank breather valve, a plurality of positioning balls 121 are provided between an inner circumferential wall of the valve stem positioning bushing 12 and an outer circumferential side of the valve stem 10, and the plurality of positioning balls 121 are arranged at an interval in the circumferential direction and stacked in the axial direction; in the vertical direction, there are 10 rows of positioning balls 121; in the circumferential direction, four positioning balls 121 are evenly distributed at an interval, the positioning balls 121 are made of ceramics and in a particle size of 3 mm; a stem bushing 11 is fitted outside of the valve stem 10, an outer circumferential wall of the stem bushing 11 is in contact with the positioning balls 121, and the stem bushing 11 is made of a PEEK composite graphite material;

At the vacuum end, the storage tank breather valve further comprises: a vacuum end mounting base 13 that is arranged in the casing of the storage tank breather valve and used for mounting the vacuum end sealing structure, wherein a vacuum end valve hole is formed on the vacuum end mounting base 13; a valve stem fixing disc 15 that is arranged on a side of the vacuum end mounting base 13 away from the valve disc 8 of the vacuum end sealing structure and covers the vacuum end valve hole; a valve stem positioning bushing 12 penetrating the valve stem fixing disc 15, wherein the valve stem 10 of the vacuum end sealing structure is connected with the valve disc 8 through the valve stem positioning bushing 12; a plurality of positioning balls 121 arranged between the inner circumferential wall of the valve stem positioning bushing 12 and the outer circumferential side of the valve stem 10, wherein the plurality of positioning balls 121 are arranged at an interval in the circumferential direction and stacked in the axial direction; the valve stem 10 is an I-shaped valve stem; in the vertical direction, there are 7 rows of positioning balls 121; in the circumferential direction, four positioning balls 121 are evenly distributed at an interval, the positioning balls 121 are made of ceramics and in a particle size of 3 mm, and the distance between the valve stem 10 and the positioning balls 121 is 0.1 mm; the valve seat 4 of the vacuum end sealing structure is seated on and securely fastened to the periphery of the seat body of the vacuum end mounting base 13, and an annular seal ring 3 is provided at the bottom of the valve seat 4 where the bottom of the valve seat 4 contacts with the periphery of the seat body.

### Example 2

The storage tank breather valve in Example 1 was used, wherein the inner diameter D of the interface flange of the storage tank breather valve (i.e., the diameter of the air inlet of the storage tank breather valve) was 300 mm, and the storage tank breather valve was designated as a storage tank breather valve A1.

The storage tank breather valve A1 was tested with a VENTIL CT800-T4 storage tank breather valve tester. The pressure end opening pressure was set to 1,350 Pa and the vacuum end opening pressure was set to -300 Pa. The test was carried out as per API 2000-2014 "Venting Atmospheric and Low-Pressure Storage Tanks" and ISO 28300-2008 "Petroleum, Petrochemical and Natural Gas Industries - Venting of Atmospheric and Low-Pressure Storage Tanks".

The result showed that the leakage rate of the storage tank breather valve A1 was 0 Nml/min under a test pressure of 1,012 Pa (1,350 Pa * 75%), and the test pressure was 1,300 Pa when the leakage rate of the storage tank breather valve A1 was 1 Nml/min, reaching 96% of the opening pressure; the leakage rate of the storage tank breather valve A1 was 0 Nml/min under a test pressure of -225 Pa (-300 Pa * 75%), and the test pressure was -290 Pa when the leakage rate of the storage tank breather valve A1 was 1 Nml/min, reaching 96% of the opening pressure.

### Example 3

The storage tank breather valve in Example 1 was used, wherein the inner diameter D of the interface flange of the storage tank breather valve (i.e., the diameter of the air inlet of the storage tank breather valve) was 150 mm, and the storage tank breather valve was designated as a storage tank breather valve A2.

The storage tank breather valve A1 was tested with a VENTIL CT800-T4 storage tank breather valve tester. The pressure end opening pressure was set to 1750 Pa and the vacuum end opening pressure was set to -300 Pa. The test was carried out as per API 2000-2014 "Venting Atmospheric and Low-Pressure Storage Tanks" and ISO 28300-2008 "Petroleum, Petrochemical and Natural Gas Industries - Venting of Atmospheric and Low-Pressure Storage Tanks".

The result showed that the leakage rate of the storage tank breather valve A2 was 0 Nml/min under a test pressure of 1,310 Pa (1,750 Pa * 75%), and the test pressure was 1,700 Pa when the leakage rate of the storage tank breather valve A2 was 1 Nml/min, reaching 97% of the opening pressure; the leakage rate of the storage tank breather valve A2 was 0 Nml/min under a test pressure of -225 Pa (-300 Pa * 75%), and the test pressure was -290 Pa when the leakage rate of the storage tank breather valve A2 was 1 Nml/min, reaching 96% of the opening pressure.

### Example 4

The storage tank breather valve in Example 1 was used, wherein the inner diameter D of the interface flange of the storage tank breather valve (i.e., the diameter of the air inlet of the storage tank breather valve) was 200 mm, and the storage tank breather valve was designated as a storage tank breather valve A3.

The storage tank breather valve A3 was tested with a VENTIL CT800-T4 storage tank breather valve tester. The pressure end opening pressure was set to 1,350 Pa and the vacuum end opening pressure was set to -300 Pa. The test was carried out as per API 2000-2014 "Venting Atmospheric and Low-Pressure Storage Tanks" and ISO 28300-2008 "Petroleum, Petrochemical and Natural Gas Industries - Venting of Atmospheric and Low-Pressure Storage Tanks".

The result showed that the initial leakage rate of the storage tank breather valve A3 was 0 Nml/min under a test pressure of 1,012 Pa (1,350 Pa * 75%), and the leakage rate of the storage tank breather valve A3 was 1 Nml/min at 1,300 Pa (1,350 Pa * 96%); the storage tank was kept still for 365 days continuously, and the leakage rate was tested every 10 days within 365 days, the average leakage rate was 1.2 Nml/min; after the storage tank breather valve was dissembled, it was found that the deformation of the flexible sealing diaphragm was 0.8%, i.e., the flexible sealing diaphragm was still in an excellent elastic state.

Repeated jump tests were carried out on the storage tank breather valve A3 at the opening pressure of 1,350 Pa; the initial leakage rate of the storage tank breather valve A3 was 0 Nml/min at a test pressure of 1,012 Pa (1,350 Pa * 75%), and the leakage rate was 1 Nml/min at 1,300 Pa (1,350 Pa * 96%); after the test was carried out for 110,000 times, the leakage rate was 0 Nml/min at the test pressure of 1,012 Pa, and 39 Nml/min at the test pressure of 1,300 Pa; after the storage tank breather valve was kept still for 20 minutes, the leakage rate was 1 Nml/min at 1,300 Pa, which proved that the composite flexible sealing diaphragm has a strong self-recovery function.

### Example 5

In this example, the storage tank breather valve A3 was used for the experiment.

A LDAR test was carried out for the storage tank breather valve mounted on a storage tank with a phx42-7314 total hydrocarbon analyzer from LDARtools (a German company), as per HJ1230-2021 "Technical Guide for Leak Detection and Repair of Volatile Organic Compounds in Industries". The storage tank breather valve A3 was mounted on the top of a benzene storage tank with capacity of 5,000 cubic meters; the VOCs concentration measured at the outlet of the storage tank breather valve A3 was 0 ppm when the pressure of the benzene storage tank was 1,020 Pa, and 0.3ppm when the pressure of the benzene storage tank was 1,300 Pa, which indicated that the storage tank breather valve A3 had a good sealing effect and a low leakage rate.

The storage tank breather valve A3 was disassembled for internal inspection during the annual inspection after it was used for one year. The initial surface roughness of the valve stem of the storage tank breather valve A3 was 8 µm; the surface of the valve stem of the storage tank breather valve A3 was smooth and uniform, and had maximum roughness of 8.5 µm after one year. Apparently, the rotary-wing valve disc was well centered when it is opened; thus, the problem of unstable gas flow caused by an ordinary valve disc in an eccentric state was solved.

Moreover, the surface of the composite flexible sealing diaphragm used in the storage tank breather valve A3 had no crease, and the deformation of the composite flexible sealing diaphragm was 0.5%, i.e., the composite flexible sealing diaphragm was still in an excellent elastic state.

It can be seen from the above example that the storage tank breather valve according to the present application can realize complete sealing and achieve a sealing effect of zero leakage from the storage tank breather valve.

### Example 6

A storage tank breather valve is configured according to the method of Example 1; however, in the first sealing structure and the second sealing structure, three annular grooves are formed in the lower surface of the valve disc 8, and correspondingly three sealing protrusions are formed on the valve seat 4, with the top of each sealing protrusion facing upwards, and the sealing protrusions on the valve seat 4 are configured corresponding to the annular grooves in the valve disc 8; the annular groove in the inner ring is a first annular groove, the annular groove in the middle ring is a second annular groove and the annular groove in the outer ring is a third annular groove, and a non-Newtonian fluid cushion ring made of polyurethane elastomer is arranged in the second annular groove; smooth arc transitions are formed at corner junctions between the sidewall of the first annular groove, the sidewall of the second annular groove and the sidewall of the third annular groove and the fitted sealing surface of the valve disc; the relationship between the diameter D1 of the central ring of the first annular groove and the diameter D2 of the central ring of the second annular groove is D2 = D1 + b, and the relationship between the diameter D2 of the central ring of the second annular groove and the diameter D3 of the central ring of the third annular groove is D3 = D2 + b, where b is 15 mm and D1 = D, the width of the first annular groove is 6mm, and the depth of the first annular groove is 2.8 mm; the width of the second annular groove is 10 mm, and the depth of the second annular groove is 2.8 mm; the width of the third annular groove is 6 mm, and the depth of the third annular groove is 2.8 mm; the sealing protrusion arranged corresponding to the first annular groove is a first sealing protrusion, the sealing protrusion arranged corresponding to the second annular groove is a second sealing protrusion, and the sealing protrusion arranged corresponding to the third annular groove is a third sealing protrusion. the height of protrusion of the second sealing protrusion is the same as that of the third sealing protrusion, the height of protrusion of the second sealing protrusion is greater than that of the first sealing protrusion, the relationship between the height of protrusion h1 of the first sealing protrusion and the height of protrusion h2 of the second sealing protrusion is h2 = h1 + a, where a is 0.4 mm. The inner diameter D of the interface flange of the storage tank breather valve (i.e., the diameter of the air inlet of the storage tank breather valve) is 300 mm, and the storage tank breather valve is designated as a storage tank breather valve A4.

The storage tank breather valve A4 was tested with a VENTIL CT800-T4 storage tank breather valve tester. The pressure end opening pressure was set to 1,350 Pa and the vacuum end opening pressure was set to -300 Pa. The test was carried out as per API 2000-2014 "Venting Atmospheric and Low-Pressure Storage Tanks" and ISO 28300-2008 "Petroleum, Petrochemical and Natural Gas Industries - Venting of Atmospheric and Low-Pressure Storage Tanks".

The result showed that the leakage rate of the storage tank breather valve A4 was 0.5 Nml/min under a test pressure of 1,012 Pa (1,350 Pa * 75%), and the test pressure was 1,150 Pa when the leakage rate of the storage tank breather valve A4 was 1 Nml/min, reaching 85% of the opening pressure; the leakage rate of the storage tank breather valve A4 was 0.7 Nml/min under a test pressure of -225 Pa (-300 Pa * 75%), and the test pressure was -250 Pa when the leakage rate of the storage tank breather valve A4 was 1 Nml/min, reaching 83% of the opening pressure.

As can be seen from the above description, the present application provides a sealing structure, a storage tank breather valve and a storage tank. In the sealing structure, the protrusion tips of an inner annular sealing protrusion 41 and an outer annular sealing protrusion 42 push a flexible sealing diaphragm 5, and the flexible sealing diaphragm 5 elastically extends into an inner annular groove 82 and an outer annular groove 83, so that the sealing structure forms an efficient dual seal, and the sealing performance is greatly improved. When the sealing structure is applied to a storage tank breather valve, the probability of leakage from the storage tank breather valve can be effectively decreased; besides, in the case that the central axis of the valve disc 8 coincides with the central axis of the valve seat 4, if one inner annular groove 82, one outer annular groove 83, one inner annular sealing protrusion 41 and one outer annular sealing protrusion 42 are provided, the above-mentioned design of the sealing structure can ensure appropriate elastic extension of the sealing diaphragm 5 in the inner annular groove 82 and the outer annular groove 83 at the same time, thereby effectively ensures that the sealing diaphragm 5 can always be closely fitted with the inner annular sealing protrusion 41 and the outer annular sealing protrusion 42, thus the sealing performance of the sealing structure is ensured; if a plurality of inner annular grooves 82, a plurality of outer annular grooves 83, a plurality of inner annular sealing protrusions 41 and a plurality of outer annular sealing protrusions 42 are provided, the production cost will be increased, and it will be difficult to ensure appropriate elastic extension of the sealing diaphragm 5 in the inner annular groove 82 in a situation that the valve disc 8 and the valve seat 4 are covered normally or eccentrically, and it will be difficult to ensure the sealing effectiveness of the sealing structure.

Furthermore, the flexible sealing diaphragm 5 comprises a polymer sheet layer 51 and a fluororubber composite layer 52 that are laminated together, so that the leakage from the storage tank breather valve can be significantly reduced; in addition, the sealing diaphragm 5 made of the above-mentioned materials has excellent durability and ductility, which are beneficial to a long-term sealing effect of the sealing structure, thereby the service reliability of the storage tank breather valve is improved; with the arrangement of the valve stem 10, the valve stem positioning bushing 12 and the positioning balls 121 in the storage tank breather valve, any lateral stress on the valve stem 10 can be effectively converted into longitudinal stress, so as to disperse the rigid stress, reduce the strain of the valve stem 10, and improve the durability of the valve stem 10 and the storage tank breather valve; the positioning balls 121 are beneficial for reducing the movement resistance of the valve stem 10, improving the smoothness of rotation of the valve stem 10 and the valve disc 8, preventing the valve stem 10 from being stuck, and avoiding eccentric rotation of the valve disc 8; with the structural arrangement that the central axis of the air inlet, the central axis of the pressure end valve hole, and the central axis of the vacuum end valve hole coincides with each other, the air can flow stably into the storage tank breather valve via the air inlet, thereby the shock and vibration of the storage tank breather valve are reduced, and the structural design can further avoid eccentric rotation of the valve disc 8.

While some preferred embodiments of the present application are described above in detail, the present application is not limited to those embodiments. Various simple variations, including combinations of the technical features in any other appropriate way, can be made to the technical scheme of the present application within the scope of the technical concept of the present application, but all such simple variations and combinations shall be deemed as disclosed content in the present application and falling in the scope of protection of the present application.

In the description of the present application, the terms "first" and "second" are used only for a descriptive purpose, but shall not be understood as indicating relative importance or implicitly indicating the quantity of the indicated technical features. Hence, unless otherwise specified, a feature confined by "first" or "second" may explicitly or implicitly comprise one or more such features; "a plurality" means two or more. The term "comprise" and any variation thereof means non-exclusive inclusion, i.e., it doesn't exclude the existence or addition of one or more other features, integers, steps, operations, units, components and/or combinations thereof.

In addition, it may be understood that the orientational or positional relations indicated by terms "central", "lateral", "upper", "lower", "left", "right", "vertical", "horizontal", "top", "bottom", "inside" or "outside", etc., are based on the orientational or positional relations indicated in the accompanying drawings. They are used only to ease the description of the present application, rather than indicating or implying that the involved device or element may have a specific orientation or may be constructed and operated in a specific orientation. Therefore, the use of these terms shall not be deemed as constituting any limitation on the present application.

Besides, unless otherwise specified and defined clearly, the terms "install", "interconnect" and "connect" may be understood broadly, for example, a connection may be a fixed connection, a detachable connection or an integral connection; it may be a mechanical connection or an electrical connection; it may be a direct connection, an indirect connection via an intermediate medium, or communication inside two elements. Those having ordinary skills in the prior art can understand the specific meanings of the terms in the present application in their contexts.

## Claims

1. A sealing structure, comprising:
a valve seat (4) and a valve disc (8), which are arranged opposite to each other and used for fitted sealing against each other, wherein a fitted sealing surface of one of the valve disc (8) and the valve seat (4) is provided with an inner annular groove (82) and an outer annular groove (83) surrounding the inner annular groove (82), and a fitted sealing side of the other of the valve disc (8) and the valve seat (4) is provided with an inner annular sealing protrusion (41) arranged in alignment to the inner annular groove (82) and an outer annular sealing protrusion (42) arranged in alignment to the outer annular groove (83);
a flexible sealing diaphragm (5) that is arranged on the fitted sealing surface and covers the inner annular groove (82) and the outer annular groove (83);
wherein, when the valve seat (4) and the valve disc (8) are in a fitted sealing state, the inner annular sealing protrusion (41) at least partially extends into the inner annular groove (82), the outer annular sealing protrusion (42) at least partially extends into the outer annular groove (83), and the flexible sealing diaphragm (5), which is pushed by respective protrusion tips of the inner annular sealing protrusion (41) and the outer annular sealing protrusion (42), extends elastically into the inner annular groove (82) and the outer annular groove (83).

2. The sealing structure of claim 1, wherein one inner annular groove (82), one outer annular groove (83), one inner annular sealing protrusion (41) and one outer annular sealing protrusion (42) are provided respectively, or a plurality of inner annular grooves (82), a plurality of outer annular grooves (83), a plurality of inner annular sealing protrusions (41) and a plurality of outer annular sealing protrusions (42) are provided and distributed in a form of concentric circles respectively.

3. The sealing structure of claim 1, wherein the inner annular groove (82) and the outer annular groove (83) are formed in the fitted sealing surface of the valve disc (8) in a recessed form, the flexible sealing diaphragm (5) covers the fitted sealing surface of the valve disc (8), and the inner annular sealing protrusion (41) and the outer annular sealing protrusion (42) are formed on the fitted sealing side of the valve seat (4);
optionally, the flexible sealing diaphragm (5) is tightly pressed on the fitted sealing surface of the valve disc (8) by a circular membrane fixing plate (6).

4. The sealing structure of claim 1, wherein the protrusion tips of the inner annular sealing protrusion (41) and the outer annular sealing protrusion (42) are formed as sharp-angled ends for pushing the flexible sealing diaphragm (5), and a tip contact surface of the sharp-angled end contacting with the flexible sealing diaphragm (5) is formed into an arc surface;
optionally, an internal angle of the sharp-angled end is within a range of 45° to 75°;
optionally, an arc diameter of the arc surface is within a range of 0.1 mm to 0.3 mm.

5. The sealing structure of claim 1, wherein the height of protrusion of the outer annular sealing protrusion (42) is greater than that of the inner annular sealing protrusion (41);
optionally, a difference between the height of protrusion of the outer annular sealing protrusion (42) and the height of protrusion of the inner annular sealing protrusion (41) is within a range of 0.1 mm to 0.8 mm.

6. The sealing structure of claim 1, wherein a sidewall of the inner annular groove (82) and a sidewall of the outer annular groove (83) are formed into a smooth arc transition respectively at a corner junction with the fitted sealing surface of the valve disc (8);
optionally, an arc angle of the transition arc is within a range of 1.1 rads to 1.2 rads.

7. The sealing structure of claim 1, further comprising:
a cushion ring (9) arranged in the recess of the outer annular groove (83), wherein the protrusion tip of the outer annular sealing protrusion (42) pushes the flexible sealing diaphragm (5) towards the direction of the cushion ring (9);
optionally, the cushion ring (9) is made of polyurethane elastomer.

8. The sealing structure of any of claims 1 to 7, wherein the flexible sealing diaphragm (5) comprises a polymer sheet layer (51) and a fluororubber composite layer (52) that are laminated together;
optionally, the fluororubber composite layer (52) is made of a raw material composition containing fluororubber, an inorganic filler, an acid absorber, a vulcanizing agent, a release agent and a colorant;
optionally, the polymer sheet that forms the polymer sheet layer (51) is selected from one or more of polyetheretherketone, polytetrafluoroethylene and polyimide;
optionally, the polymer sheet layer (51) is in thickness of 0.1 mm to 1 mm;
optionally, a ratio of the thickness of the polymer sheet layer (51) to the thickness of the fluororubber composite layer (52) is within a range of 1:1 to 1:4;
optionally, the flexible sealing diaphragm (5) is in an annular shape.

9. The sealing structure of any of claims 1 to 7, wherein the valve disc (8) is a rotary-wing valve disc that can be driven by overflowing gas flow to spin.

10. The sealing structure of claim 9, wherein the rotary-wing valve disc comprises:
a disc body, wherein the inner annular groove (82) and the outer annular groove (83) are formed in the disc surface of the disk body;
a rotary-wing ring, which is pendent downwards from the periphery of the disc body and comprises a plurality of rotary wings (81) arranged at an interval in a circumferential direction, with a clearance gas flow passage formed between every two adjacent rotary wings (81), wherein the valve disc (8) can be driven to spin by the overflowing gas flow flowing through the clearance gas flow passages from inside to outside;
optionally, an arc angle of the rotary wing is within a range of 0.3 rads to 0.4 rads;
optionally, there are 15-20 rotary wings;
optionally, the width of the clearance gas flow passage is within a range of 3 mm to 6 mm.

11. A storage tank breather valve having a pressure end and a vacuum end therein, comprising the sealing structure according to any of claims 1 to 10, which is arranged at the pressure end and/or the vacuum end.

12. The storage tank breather valve of claim 11, wherein the sealing structure comprises a pressure end sealing structure arranged at the pressure end and a vacuum end sealing structure arranged at the vacuum end; the valve disc (8) of the sealing structure is connected with a valve stem (10), the valve stem (10) connected with the pressure end sealing structure extends away from the valve seat (4) from the disc surface of the valve disc (8), and the valve stem (10) connected with the vacuum end sealing structure extends towards the valve seat (4) from the disc surface of the valve disc (8).

13. The storage tank breather valve of claim 12, wherein at the pressure end, a pressure end mounting base (1) extending radially inwards is formed on the inner wall of the casing of the storage tank breather valve, and a pressure end valve hole is formed around the pressure end mounting base (1); at the vacuum end, a vacuum end mounting base (13) for mounting the vacuum end sealing structure is formed in the casing of the storage tank breather valve, and a vacuum end valve hole is formed around the vacuum end mounting base (13); an air inlet is formed at the bottom of the casing of the storage tank breather valve, and a central axis of the pressure end valve hole, a central axis of the vacuum end valve hole and a central axis of the air inlet coincide with each other.

14. The storage tank breather valve of claim 12, wherein at the pressure end, a valve stem positioning bushing (12) fitted outside of the valve stem (10) of the pressure end sealing structure is fixedly arranged in the storage tank breather valve, a plurality of positioning balls (121) are provided between an inner circumferential wall of the valve stem positioning bushing (12) and an outer circumferential side of the valve stem (10), and the plurality of positioning balls (121) are arranged at an interval in the circumferential direction and stacked in the axial direction.

15. The storage tank breather valve of claim 14, wherein a stem bushing (11) is fitted outside of the valve stem (10), and an outer circumferential wall of the stem bushing (11) is in contact with the positioning balls (121).

16. The storage tank breather valve of claim 12, wherein at the pressure end, a pressure end mounting base (1) extending radially inwards is formed on the inner wall of the casing of the storage tank breather valve, the valve seat (4) of the pressure end sealing structure is seated on and securely fastened to the periphery of the base body of the pressure end mounting base (1), and an annular seal ring (3) is provided at the bottom of the valve seat (4) where the bottom of the valve seat (4) contacts with the periphery of the base body.

17. The storage tank breather valve of claim 12, wherein at the vacuum end, the storage tank breather valve further comprises:
a vacuum end mounting base (13) that is arranged in the casing of the storage tank breather valve and used for mounting the vacuum end sealing structure, wherein a vacuum end valve hole is formed around the vacuum end mounting base (13);
a valve stem fixing disc (15) that is arranged on a side of the vacuum end mounting base (13) away from the valve disc (8) of the vacuum end sealing structure and covers the vacuum end valve hole;
a valve stem positioning bushing (12) penetrating the valve stem fixing disc (15), wherein the valve stem (10) of the vacuum end sealing structure is connected to the valve disc (8) through the valve stem positioning bushing (12);
a plurality of positioning balls (121) arranged between the inner circumferential wall of the valve stem positioning bushing (12) and the outer circumferential side of the valve stem (10), wherein the plurality of positioning balls (121) are arranged at an interval in the circumferential direction and stacked in the axial direction.

18. The storage tank breather valve of claim 17, wherein the valve seat (4) of the vacuum end sealing structure is seated on and securely fastened to the periphery of the base body of the vacuum end mounting base (13), and an annular seal ring (3) is provided at the bottom of the valve seat (4) where the bottom of the valve seat (4) contacts with the periphery of the base body.

19. The storage tank breather valve of claim 11, further comprising:
a valve stem (10) connected with the valve disc (8);
a valve stem positioning bushing (12) fixedly arranged and fitted outside of the valve stem (10);
a plurality of positioning balls (121) arranged between the inner circumferential wall of the valve stem positioning bushing (12) and the outer circumferential side of the valve stem (10), wherein the plurality of positioning balls (121) are arranged at an interval in the circumferential direction and stacked in the axial direction.

20. The storage tank breather valve of claim 11, wherein the casing of the storage tank breather valve comprises a straight cylindrical section and a reduced section that is reduced in diameter inwards from the bottom of the straight cylindrical section, and the circumferential wall of the reduced section is formed as an arc wall.

21. The storage tank breather valve of claim 11, wherein a vacuum cavity (19) is formed inside the casing of the storage tank breather valve at the vacuum end, and the storage tank breather valve further comprises a vacuum firestop plate (22) located at a lateral side of the vacuum cavity (19) and embedded in a sidewall of the casing, and a sidewall of the vacuum cavity (19) away from the vacuum firestop plate (22) is an arc wall.

22. The storage tank breather valve of claim 21, further comprising a vacuum rain cover (23) that is arranged outside the vacuum firestop plate (22) and is arc-shaped.

23. A storage tank, comprising the storage tank breather valve of any of claims 11 to 22.
